# EUROPÄISCHE PATENTSCHRIFT

(11) **EP 1 304 494 B1**
(45) Veröffentlichungstag und Bekanntmachung des Hinweises auf die Patenterteilung: **02.06.2004**
(21) Anmeldenummer: 02019630.9
(22) Anmeldetag: 03.09.2002
(51) Int. Cl.: F16D 13/52, F16D 13/74

(54) **Lamellenkupplung für Motorräder**
Multi-disc clutch for motorcycle
Embrayage multidisques pour motocyclette

(30) Priorität: 13.10.2001 DE 10150704
(43) Veröffentlichungstag der Anmeldung: 23.04.2003
(73) Patentinhaber: Bayerische Motoren Werke Aktiengesellschaft, 80809 München (DE)
(72) Erfinder: Miritsch, Josef, 85302 Gerolsbach (DE)

(56) Entgegenhaltungen:
- US-A- 4 601 375
- PATENT ABSTRACTS OF JAPAN vol. 007, no. 207 (M-242), 13. September 1983 (1983-09-13) & JP 58 102827 A (HONDA GIKEN KOGYO KK), 18. Juni 1983 (1983-06-18)
- PATENT ABSTRACTS OF JAPAN vol. 010, no. 372 (M-544), 11. Dezember 1986 (1986-12-11) & JP 61 165029 A (HONDA MOTOR CO LTD), 25. Juli 1986 (1986-07-25)
- PATENT ABSTRACTS OF JAPAN vol. 016, no. 284 (M-1270), 24. Juni 1992 (1992-06-24) & JP 04 073429 A (SUZUKI MOTOR CORP), 9. März 1992 (1992-03-09)

## Beschreibung

Die vorliegende Erfindung betrifft eine Lamellenkupplung gemäß dem Oberbegriff des Patentanspruchs 1.

Eine derartige Lamellenkupplung ist aus der JP 58102827 A1 bekannt. Ähnliche Lamellenkupplungen sind ferner aus der JP 61165029 A, JP 04073429 A und US-A 4 601 375 bekannt.

Eine weitere Lamellenkupplung ist aus der 199 37 440 C1 bekannt. Diese Lamellenkupplung weist ein in einem Kupplungsgehäuse angeordnetes Lamellenpaket auf, wobei ein Teil der Lamellen auf einem Lamellenträger angeordnet ist, der fest mit einer hohlzylindrischen Kupplungswelle verbunden ist. Die hohlzylindrische Kupplungswelle dient einerseits zur Übertragung des Kupplungsdrehmoments und zusätzlich als "Ölleitung". Die Kupplungswelle mündet in den Innenraum des Kupplungsgehäuses und versorgt das Lamellenpaket sowie diverse Lager mit Öl. Das Öl dient dabei als Schmiermittel und als Kühlmedium. Bei Kupplungsvorgängen entsteht nämlich an den Lamellen Reibungswärme die größtenteils über das Öl abgeführt werden muss.

Herkömmliche Lamellenkupplungen sind mit ihrer Ölversorgung an den Motorölkreislauf angeschlossen. Nachteilig hierbei ist, dass bei manchen Betriebszuständen der Kupplung unnötig viel Öl durch die Lamellenkupplung gepumpt wird. Dies führt zu Planschverlusten, was sich ungünstig auf den Wirkungsgrad der Kupplung und somit auf den Gesamtwirkungsgrad des Fahrzeugs auswirkt.

Aufgabe der Erfindung ist es, eine Lamellenkupplung zu schaffen, die einen höheren Gesamtwirkungsgrad ermöglicht.

Diese Aufgabe wir durch die Merkmale des Patentanspruchs 1 gelöst. Vorteilhafte Ausgestaltungen und Weiterbildungen der Erfindung sind den Unteransprüchen zu entnehmen.

Das Grundprinzip der Erfindung besteht darin, den zur Schmierung und Kühlung der Lamellenkupplung dienenden Ölvolumenstrom bedarfsgerecht zu steuern bzw. zu regeln. Im Ölkreislauf der Lamellenkupplung ist hierfür eine "Steuereinrichtung" vorgesehen, die eine Steuerung des Ölvolumenstroms ermöglicht.

Der Ölvolumenstrom kann also "hochgefahren" werden, wenn eine große Wärmeleistung abzuführen ist, insbesondere bei der Kupplungsbetätigung, d.h. während des Ein- bzw. Auskuppelns. Bei geschlossener Kupplung hingegen ist der Wärmeanfall vergleichsweise gering. Somit kann bei geschlossener Kupplung der Ölvolumenstrom gering gehalten werden. Dies hat vor allem den Vorteil, dass sich die Planschverluste in der Lamellenkupplung verringern und somit der Gesamtwirkungsgrad verbessert.

Ein weiterer Vorteil gegenüber herkömmlichen Kupplungen besteht darin, dass bei einer bedarfsgerechten Ölvolumenstromregelung die Anzahl der Kupplungslamellen verringert werden kann. Bei einer herkömmlichen Lamellenkupplung muss bereits bei der Konstruktion ein "Kompromiß" zwischen dem bereitgestellten, im wesentlichen konstant bleibenden Ölvolumenstrom und der Anzahl bzw. Größe der Lamellen gefunden werden.

Das Lamellenpaket muss nämlich so ausgelegt sein, dass es auch hohe thermische Belastungen erträgt. Ein hoher Ölvolumenstrom wiederum verursacht Planschverluste. Große bzw. viele Lamellen erhöhen die Kosten und beanspruchen Bauraum. Wählt man einen "mittleren" Ölvolumenstrom, um die Planschverluste in Grenzen zu halten, so muß eine gewisse "Reserve" an "Lamellenfläche" vorgesehen sein, was wiederum Kosten und Bauraum beansprucht.

Mit der Erfindung kann nun bei hohen thermischen Belastungen der Lamellen der Ölvolumenstrom ebenfalls entsprechend stark erhöht werden. Somit kann die Anzahl bzw. Größe der Lamellen relativ gering gehalten werden. Durch die bedarfsgerechte Steigerung des Ölvolumenstroms kann eine hinreichend hohe Wärmeleistung abgeführt werden, so dass die zulässige Betriebstemperatur der Lamellen nicht überschritten wird.

Vorzugsweise handelt es sich bei der oben genannten "Steuereinrichtung" um eine Einrichtung zur Variierung des Strömungsquerschnitts des Ölkreislaufs der Lamellenkupplung.

Bei einer ersten Variante der Erfindung ist im Inneren der hohlzylindrischen Kupplungswelle ein "Ventil" angeordnet, dessen Durchflussquerschnitt in Abhängigkeit des Kupplungszustandes, d.h. in Abhängigkeit von der Stellung der Kupplung variierbar ist. Das Ventil kann konstruktiv sehr einfach aufgebaut sein, nämlich durch eine fest in der hohlzylindrischen Welle angeordnete Blende und eine damit zusammenwirkende Nadel bzw. einen damit zusammenwirkenden axial verschieblichen Stößel. Durch axiales Verschieben der Nadel bzw. des Stößels kann der Strömungsquerschnitt des Ventils kontinuierlich verändert werden. Die Stößelspitze ist hierzu vorzugsweise konisch gestaltet.

Wenn ein großer Ölvolumenstrom erforderlich ist, d.h. wenn eine große Wärmeleistung über das Kupplungsöl abzuführen ist, ist das Ventil weit geöffnet, d.h. die Stößelspitze befindet sich in einem relativ großen Abstand von der Blende. Im Dauerbetrieb hingegen, d.h. wenn nur eine relativ geringe Wärmeleistung über das Kupplungsöl abzuführen ist, ist die Stößelspitze relativ nah an die Blendenöffnung herangerückt, wodurch sich ein enger Durchflussquerschnitt und somit relativ geringer Ölvolumenstrom ergibt.

Vorzugsweise ist die Nadel bzw. der Stößel mechanisch mit dem "Ausrückelement" der Lamellenkupplung verbunden. Das heißt, beim Betätigen der Lamellenkupplung über das Ausrückelement wird der Stößel "automatisch" mitbewegt. Konstruktiv einfach ist es, wenn der Stößel als domartiger Fortsatz des Ausrückers der Kupplung ausgebildet ist.

Im folgenden wird die Erfindung an Hand von Ausführungsbeispielen im Zusammenhang mit der Zeichnung näher erläutert. Es zeigen:
- Figur 1: einen Querschnitt durch eine Lamellenkupplung gemäß der Erfindung;
- Figuren 2, 3: zwei verschiedene Stellungen eines in die Kupplungswelle integrierten Ventils der Lamellenkupplung der Figur 1; und

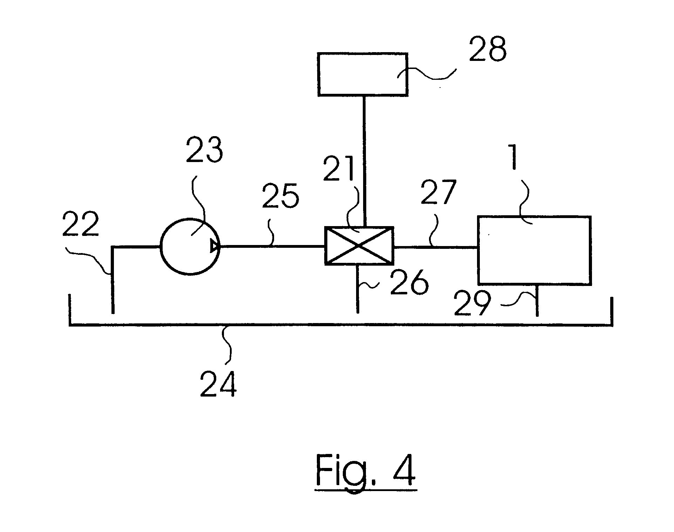

- Figur 4: eine nicht erfindungsgemäße schematische Darstellung eines "außerhalb" der Lamellenkupplung angeordneten elektrisch ansteuerbaren Ventils.

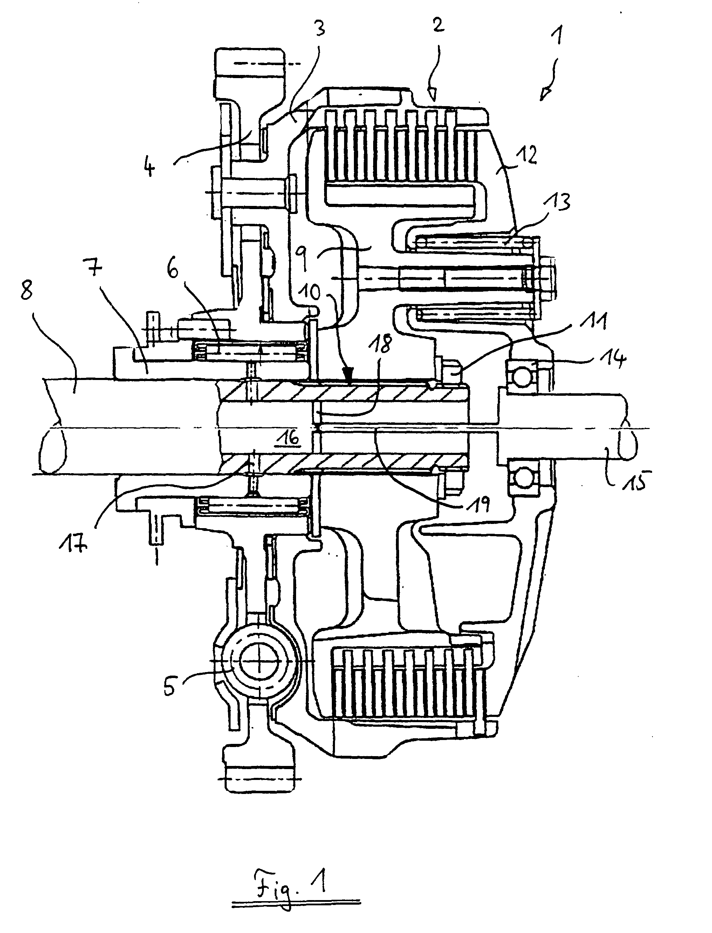

**Figur 1** zeigt eine Lamellenkupplung 1 mit einem Lamellenpaket 2. Ein erster Teil der Lamellen ist an einem Lamellenträger 3 angeordnet, der mit einem Zahnkranzträger 4 verbunden ist. Der Lamellenträger 3 ist mit dem Zahnkranzträger 4 über Federelemente 5 in Umfangsrichtung elastisch dämpfend gekoppelt und drehbar über ein Nadellager 6 auf einer Hülse 7 gelagert, die auf einer hohlzylindrischen Kupplungswelle 8 angeordnet ist. Ein zweiter Lamellenträger 9 ist über eine Keilverzahnung 10 drehfest auf der Kupplungswelle 8 angeordnet und in Axialrichtung durch eine Wellenmutter 11 fixiert.

Ferner ist eine Druckplatte 12 vorgesehen, die über Anpressfedern 13 mit dem Lamellenträger 9 verspannt ist und die über ein Kugellager 14 mit einem axial verschiebbaren Ausrückelement 15 verbunden ist. Die Anpressfedem 13 pressen die Druckplatte 12 gegen den Lamellenträger 9. Dadurch werden die einzelnen Lamellen des Lamellenpakets 2 zusammengepresst, was dem eingekuppelten Zustand der Lamellenkupplung 1 entspricht.

Durch axiales Verschieben des Ausrückelements 15 nach "rechts" kann die Druckplatte 12 entgegen der Anpresskraft der Anpressfedem 13 nach rechts verschoben werden, was einem Öffnen der Lamellenkupplung 1 entspricht.

Im folgenden wird auf den Kern der Erfindung, d.h. auf die Ölversorgung der Lamellenkupplung näher eingegangen. Die Lamellenkupplung 1 wird über einen hohlzylindrischen Innenraum 16 der Kupplungswelle 8 mit Öl versorgt. Das Öl dient einerseits als Schmiermittel für die Lamellenkupplung und diverse Lager. Zusätzlich dient das Öl als Kühlmittel zum Abführen der im Lamellenpaket 2 anfallenden Reibwärmeleistung.

Von dem hohlzylindrischen Innenraum 16 zweigen quer Stichleitungen 17 ab, die das Nagellager 6 mit Schmieröl versorgen. Ferner ist in der hohlzylindrischen Kupplungswelle 8 ein "Ventil" vorgesehen, das eine Steuerung des vom Innenraum 16 in die Lamellenkupplung 1 fließenden Ölvolumenstroms ermöglicht. Das "Ventil" besteht hier aus einer fest in der Kupplungswelle 8 angeordneten Blende 18 und einem dornartigen Stößel 19, der als Fortsatz des Ausrückelements 15 ausgebildet ist.

In Abhängigkeit von der axialen Stellung des Ausrückelements 15 bzw. des einstückig damit verbundenen Stößels 19 ergibt sich ein "effektiver Durchflussquerschnitt" durch die Blende 18. Durch nach "rechts" Verschieben des Stößels 19 kann das Ventil geöffnet werden, was zu einer Vergrößerung des Ölvolumenstroms führt. Durch Heranschieben der Stößeispitze an die Blende 18 kann der Durchflussquerschnitt und somit der Ölvolumenstrom verringert werden.

Mit dieser Anordnung ist somit eine konstruktiv sehr elegante mechanische Ölmengenbegrenzung durch Variierung des Durchflussquerschnitts an der Blende 18 möglich. Der Stößel 19 wird dabei "automatisch" mit dem Ausrückelement 15 beim Betätigen der Kupplung mitbewegt. Bei geschlossener Kupplung befindet sich der Stößel in seiner linken Endstellung, was einem relativ geringen Ölvolumenstrom entspricht. Beim Öffnen der Kupplung wird das Ausrückelement 15 bzw. der Stößel 19 nach rechts verschoben, wodurch sich der Ölvolumenstrom vergrößert.

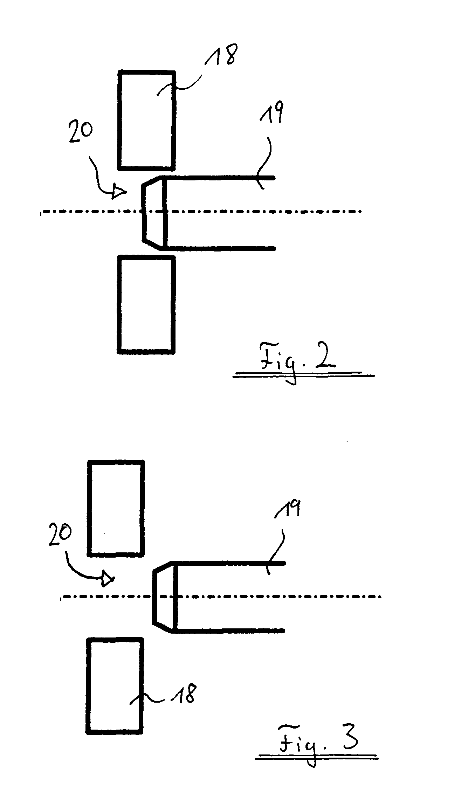

Die **Figuren 2 und 3** zeigen die Blende 18 bzw. den Stößel 19 im Bereich der Stößelspitze 20 in zwei verschiedenen Stellungen. In Figur 2 befindet sich der Stößel 19 in seiner linken Endstellung, was einem relativ geringen Durchflussquerschnitt und einem geringen Ölvolumenstrom entspricht. In Figur 3 hingegen befindet sich der Stößel 19 in einer rechten Stellung, was einem größeren Durchflussquerschnitt und somit einem größeren Ölvolumenstrom entspricht. Wie aus den Figuren 2 und 3 ersichtlich ist, ist der Stößel im Bereich der Stößelspitze 20 konisch angespitzt, so dass durch axiales Verschieben des Stößels 19 der Durchflussquerschnitt zumindest in einem bestimmten Verschiebebereich relativ kontinuierlich "verstellbar" ist.

Zusammenfassend ergibt sich durch eine derartige bedarfsgerechte Ölvolumenstromregelung ein besserer Wirkungsgrad. Desweiteren ist durch die "gezielt der anfallenden Wärmeleistung anpaßbare Kupplungskühlung" eine Bauraumreduzierung möglich.

## Patentansprüche

1. Lamellenkupplung für Motorräder mit
einer hohlzylindrischen Kupplungswelle (8), deren hohlzylindrischer Innenraum (16) eine Ölleitung ist, die mit einem Innenraum eines Kupplungsgehäuses in Fluidverbindung steht,
wobei eine Steuereinrichtung (18, 19, 21) zur Steuerung des in der Kupplungswelle (8) strömenden Ölvolumenstroms vorgesehen ist,
**dadurch gekennzeichnet, dass**
im Innenraum (16) der hohlzylindrischen Kupplungswelle (8) eine Blende (18) und koaxial zu einer Öffnung der Blende (18) ein nadelartiger Stößel (19) angeordnet sind.

2. Lamellenkupplung nach Anspruch 1,
**dadurch gekennzeichnet, dass** die Steuereinrichtung (18, 19, 21) eine Einrichtung zur Variierung des Durchflussquerschnitts durch die Blende (18) ist.

3. Lamellenkupplung nach Anspruch 1 oder 2,
**dadurch gekennzeichnet, dass** die Steuereinrichtung (18, 19, 21) ein Ventil aufweist, das im Innenraum (16) der hohlzylindrischen Kupplungswelle (8) angeordnet ist, wobei das Ventil durch die Blende (18) und den damit zusammenwirkenden Stößel (19) gebildet ist.

4. Lamellenkupplung nach einem der Ansprüche 1 bis 3,
**dadurch gekennzeichnet, dass** der Stößel (18, 19) eine konische Stößelspitze (20) aufweist.

5. Lamellenkupplung nach einem der Ansprüche 1 oder 4,
**dadurch gekennzeichnet, dass** die Blende (18) fest im Innenraum (16) der Kupplungswelle (8) angeordnet ist und dass der Stößel (19) axial verschieblich bezüglich der Blende (18) ist.

6. Lamellenkupplung nach einem der Ansprüche 1 bis 5,
**dadurch gekennzeichnet, dass** der Stößel (19) mit einem axial beweglichen Ausrückelement (15) der Lamellenkupplung (1) verbunden ist.

7. Lamellenkupplung nach einem der Ansprüche 1 bis 6,
**dadurch gekennzeichnet, dass** sich der Stößel (19) im eingekuppelten Zustand der Lamellenkupplung (1) in einer an die Blende (18) herangerückten Stellung befindet und im ausgekuppelten Zustand in einer von der Blende (18) weggerückten Stellung.

8. Lamellenkupplung nach einem der Ansprüche 1 bis 7,
**dadurch gekennzeichnet, dass** die Lamellenkupplung (1) von einer Motorölpumpe (23) mit Öl versorgt wird.

9. Lamellenkupplung nach einem der Ansprüche 1 bis 8,
**dadurch gekennzeichnet, dass** die Lamellenkupplung (1) einen ersten Lamellen zugeordneten ersten Lamellenträger (3) aufweist, der über eine Keilverzahnung (10) drehfest mit der Kupplungswelle (8) verbunden ist, und einen zweiten Lamellen zugeordneten zweiten Lamellenträger (9) und dass ein Anpreßelement (12) vorgesehen ist, das durch Anpressfedern (13) mit dem zweiten Lamellenträger (9) verspannt ist, wobei das Anpresselement (12) mittels eines Ausrückelements (15) ausrückbar ist.

## Claims

1. A disc clutch for motorcycles comprising a hollow cylindrical clutch shaft (8) with a hollow cylindrical interior (16) in the form of an oil pipe connected and conveying fluid to a space inside a clutch housing, wherein a control device (18, 19, 21) is provided for controlling the flow rate of oil into the clutch shaft (8), **characterised in that** a baffle (18) is disposed in the interior (16) of the hollow cylindrical clutch shaft (8) and a needle-like push rod (19) is disposed coaxially with an opening in the baffle (18).

2. A disc clutch according to claim 1, **characterised in that** the control device (18, 19, 20) is for varying the flow cross-section through the baffle (18).

3. A disc clutch according to claim 1 or 2, **characterised in that** the control device (18, 19, 21) comprises a valve disposed in the interior (16) of the hollow cylindrical clutch shaft (8), wherein the valve is made up of the baffle (18) and the push rod (19) co-operating therewith.

4. A disc clutch according to any of claims 1 to 3, **characterised in that** the push rod (18, 19) has a conical tip (20).

5. A disc clutch according to claim 1 or 4, **characterised in that** the baffle (18) is fixed in the interior (16) of the clutch shaft (8) and the push rod (19) is axially movable relative to the baffle (18).

6. A disc clutch according to any of claims 1 to 5, **characterised in that** the push rod (19) is connected to an axially movable disengagement element (15) for disengaging the disc clutch (1).

7. A disc clutch according to any of claims 1 to 6, **characterised in that** the push rod (19) is moved into a position towards the baffle (18) when the disc clutch (1) is engaged and moved into a position away from the baffle when the clutch is disengaged.

8. A disc clutch according to any of claims 1 to 7, **characterised in that** it is supplied with oil by an engine oil pump (23).

9. A disc clutch according to any of claims 1 to 8, **characterised in that** it has a first disc holder (3) associated with first discs and non-rotatably connected by splines (10) to the clutch shaft (8) and also has a second disc holder (9) associated with second discs, and a pressure element (12) is provided and clamped to the second disc holder (9) by springs (13), wherein the pressure element (12) is disengageable by a disengagement element (15).

## Revendications

1. Embrayage à disques multiples pour motocycles comprenant un arbre d'embrayage (8) cylindrique creux, dont l'espace intérieur (16) cylindrique creux est une conduite d'huile en communication de fluide avec un espace intérieur d'un carter d'embrayage,
un dispositif de commande (18, 19, 21) étant prévu pour commander le débit volumique d'huile s'écoulant dans l'arbre d'embrayage (8),
**caractérisé en ce que**
dans l'espace intérieur (16) de l'arbre d'embrayage (8) cylindrique creux sont disposés un diaphragme (18) et, coaxialement par rapport à une ouverture du diaphragme (18), un poussoir (19) en forme d'aiguille.

2. Embrayage à disques multiples selon la revendication 1,
**caractérisé en ce que**
le dispositif de commande (18, 19, 21) est un dispositif pour faire varier la section transversale d'écoulement à travers le diaphragme (18).

3. Embrayage à disques multiples selon la revendication 1 ou 2,
**caractérisé en ce que**
le dispositif de commande (18, 19, 21) présente une soupape disposée dans l'espace intérieur (16) de l'arbre d'embrayage (8) cylindrique creux, la soupape étant constituée diaphragme (18) et du poussoir (19) coopérant avec celui-ci.

4. Embrayage à disques multiples selon l'une quelconque des revendications 1 à 3,
**caractérisé en ce que**
le poussoir (19) présente une pointe de poussoir (20) conique.

5. Embrayage à disques multiples selon l'une quelconque des revendications 1 ou 4,
**caractérisé en ce que**
le diaphragme (18) est disposé à demeure dans l'espace intérieur (16) de l'arbre d'embrayage (8), et le poussoir (19) est axialement mobile par rapport au diaphragme (18).

6. Embrayage à disques multiples selon l'une quelconque des revendications 1 à 5,
**caractérisé en ce que**
le poussoir (19) est relié à un élément de débrayage (15) axialement mobile de l'embrayage à disques multiples (1).

7. Embrayage à disques multiples selon l'une quelconque des revendications 1 à 6,
**caractérisé en ce que**
le poussoir (19), à l'état embrayé de l'embrayage à disques multiples (1), se trouve dans une position près du diaphragme (18) et, à l'état débrayé, dans une position éloignée du diaphragme (18).

8. Embrayage à disques multiples selon l'une quelconque des revendications 1 à 7,
**caractérisé en ce que**
l'embrayage à disques multiples (1) est alimenté en huile par une pompe à huile de moteur (23).

9. Embrayage à disques multiples selon l'une quelconque des revendications 1 à 8,
**caractérisé en ce que**
l'embrayage à disques multiples (1) présente un premier support de disques (3) associé à des premiers disques, qui est relié de manière immobile en rotation à l'arbre d'embrayage (8) par l'intermédiaire d'une denture à coins (10), et un deuxième support de disques (9) associé à des deuxièmes disques, et un élément de compression (12) est prévu qui est serré par des ressorts de serrage (13) sur le deuxième support de disques (9), l'élément de compression (12) pouvant être débrayé au moyen d'un élément de débrayage (15).
